# EUROPÄISCHE PATENTSCHRIFT

(11) **EP 1 479 049 B1**
(45) Veröffentlichungstag und Bekanntmachung des Hinweises auf die Patenterteilung: **13.09.2006**
(21) Anmeldenummer: 03704656.2
(22) Anmeldetag: 19.02.2003
(51) Int. Cl.: G07C 9/00, G07F 7/10

(54) **VERFAHREN ZUM NACHWEIS DER BERECHTIGUNG EINER PERSON ZUR NUTZUNG EINES TRAGBAREN DATENTRAEGERS**
METHOD FOR DETERMINATION OF THE AUTHORISATION OF A PERSON TO USE A PORTABLE DATA SUPPORT
PROCEDE POUR CONSTATER LE DROIT D'UNE PERSONNE A UTILISER UN SUPPORT DE DONNEES PORTATIF

(30) Priorität: 20.02.2002 DE 10207056
(43) Veröffentlichungstag der Anmeldung: 24.11.2004
(73) Patentinhaber: Giesecke & Devrient GmbH, 81677 München (DE)
(72) Erfinder: MEISTER, Gisela, 81737 München (DE)
(74) Vertreter: Klunker . Schmitt-Nilson . Hirsch
(86) Internationale Anmeldenummer: PCT/EP2003/001678
(87) Internationale Veröffentlichungsnummer: WO 2003/071492

(56) Entgegenhaltungen:
- DE-A- 19 922 946
- US-A- 4 993 068
- CHRISTOPHER CALABRESE: "The trouble with biometrics" ;LOGIN:, USENIX ASSOCIATION, EL CERRITO, CA, US, Bd. 24, Nr. 4, August 1999 (1999-08), XP002207744 ISSN: 1044-6397

## Beschreibung

Die Erfindung geht aus von einem Verfahren nach der Gattung des Hauptanspruchs. Ein solches ist z.B. aus der US 5,280,527 bekannt. Danach wird auf einer IC-Karte eine Dateninformation abgelegt, die aus einem biometrischen Merkmal einer zur Nutzung berechtigten Person abgeleitet wurde. Die IC-Karte besitzt desweiteren einen Sensor zur Erkennung des biometrischen Merkmales. Um den Datenträger zu nutzen, muß die nutzende Person das biometrische Merkmal an dem Sensor erneut bereitstellen. Die IC-Karte bildet daraus wiederum eine abgeleitete Information und vergleicht sie mit der gespeicherten biometrischen Dateninformation. Bei Übereinstimmung gibt sie die beabsichtigte Nutzung frei. Das Verfahren gewährleistet, daß eine IC-Karte nur von einer anwesenden, berechtigten Person genutzt werden kann. Es erfordert allerdings die Bereitstellung von aufwendigen und damit teuren IC-Karten.

Aus der Veröffentlichung "the trouble with biometrics" von C. Calabrese, 1999 ist zur Realisierung einer Authentisierung mittels biometrischer Merkmale die Verwendung einer Cryptocard bekannt. Um zu verhindern, daß auf solchen Karten gespeicherte biometrische Datensätze gestohlen werden, wird vorgeschlagen, auf den Karten nicht biometrische Daten selbst sondern nur Hashwerte davon abzulegen. Zur Durchführung einer Authentisierung wird einer Karte ein von einem Lesegerät vorort gewonnenes biometrisches Merkmal zugeführt, das die Karte in einen Hashwert umsetzt. Der so gewonnene Hashwert wird mit dem auf der Karte gespeicherten Hashwert verglichen.

WO 01/15378 offenbart ein Verfahren zum Schutz einer digitalen Signatur, das sicherstellt, daß eine digitalen Signatur nur durch die berechtigte Person verwendet werden kann. Hierzu wird zunächst ein biometrisches Merkmal der Person ermittelt und durch Digitalisierung in eine binäre Repräsentation überführt. Desweiteren wird der Signaturschlüssel unter Verwendung eines fehlertoleranten Kodierungsverfahrens in einen Schlüsselkode überführt. Anschließend wird der Schlüsselkode mit der binären Repräsentation des biometrischen Merkmales verknüpft. Um den in dem verknüpften Schlüsselkode enthaltenen Signaturschlüssel nachfolgend wiederzuerlangen, muß erneut das biometrische Merkmal der berechtigten Person bereitgestellt werden, welches darauf wiederum digitalisiert und in eine binäre Repräsentation überführt wird. Mit der binären Repräsentation wird sodann der verknüpfte Schlüsselkode entschlüsselt. Aus dem Ergebnis wird schließlich unter Einbeziehung des eingesetzten fehlertoleranten Kodierungsverfahrens der Signaturschlüssel wiederhergestellt. Die Rückgewinnung gelingt nur, wenn das von der Person gelieferte biometrische Merkmal höchstens im Rahmen der zulässigen Toleranz von den zur Verknüpfung der geheimzuhaltenden Daten eingesetzten abweicht.

Eine gemäß diesem bekannten Verfahren gesicherte Signatur ist gegen kryptologische Ausspähungsversuche gut geschützt. Angreifbar ist es gleichwohl, wenn das zur Entschlüsselung verwendete biometrische Merkmal manipuliert wurde und nicht von der berechtigten Person bereitgestellt wird. So kann der Fingerabdruck einer Person beispielsweise von einem von dieser Person verwendeten Gebrauchsgegenstand ohne das Wissen der Person genommen werden. Die Verwendung des Verfahrens zum Schutz von geheimzuhaltenden Daten bietet sich deshalb bevorzugt für Anwendungen in sicheren Nutzungsumgebungen an, in denen gewährleistet ist, daß ein biometrisches Merkmal nur von einer tatsächlich anwesenden, berechtigten Person bereitgestellt werden kann. Bei Anwendung in Chipkartensystemen erfordert das Verfahren zudem die Durchführung der Signaturrückgewinnung direkt auf der Chipkarte, weil die Signatur anderenfalls zumindest vorübergehend im Klartext außerhalb der Chipkarte vorliegen würde und dort angreifbar wäre.

WO 98/50875 offenbart ein Verfahren zur Authentisierung einer elektronischen Transaktion, welches auf einer Kopplung eines biometrischen Identifikationsverfahrens mit einem Signaturverfahren sowie einem Zertifizierungskonzept beruht. Zum Nachweis der Berechtigung eines Nutzers zur Durchführung einer Transaktion werden einer Transaktionsausführungseinrichtung über ein Datennetz zum einen biometrische Daten des Nutzers, zum anderen eine mittels dieser biometrischen Daten gebildete digitale Signatur übermittelt. In der Transaktionsausführungseinrichtung werden die übermittelten biometrischen Daten mit aus zertifizierten Referenzdaten zurückgenommenen biometrischen Musterdaten verglichen. Die zertifizierten Referenzdaten sind in der Transaktionsausführungseinrichtung in einem Speicher abgelegt, der in Gestalt einer Chipkarte realisiert sein kann. Desweiteren wird die übermittelte Signatur geprüft, indem in der Prüfeinrichtung aus den übermittelten biometrischen Daten eine Referenzsignatur gebildet wird. Indem es biometrische Daten mit vom Nutzer einzugebenden Identifizierungsdaten verknüpft, verhindert das Verfahren Manipulationen mittels unrechtmäßig erworbener Biometriedaten. Für die Rückgewinnung der biometrischen Musterdaten erfordert das Verfahren allerdings notwendig die Einbindung einer Zertifizierungsstelle.

Aus der US 4,993,068 A1 ist ein Berechtigungsprüfsystem bekannt, das u. a. auf der Basis von Fingerabdrücken die Identität eines Nutzers prüft. In einer Vorbereitungsphase werden dabei zunächst Fingerabdruckdaten aufgenommen und unter Verwendung eines asymetrischen Verschlüsselungsverfahrens in verschlüsselter Form auf einen tragbaren Datenträger gebracht. Zur Prüfung präsentiert der Nutzer den tragbaren Datenträger sowie erneut seinen Fingerabdruck. Zugleich wird der auf dem Datenträger hinterlegte verschlüsselte Datensatz angefordert, entschlüsselt und mit dem aus dem präsentierten Fingerabdruck abgeleiteten Datensatz verglichen. Das bekannte System bezieht seine Sicherheit aus der Ver- und Entschlüsselung von zu schützenden Daten mittels eines asymmetrischen Verschlüsselungsverfahrens. Die zur Durchführung eines solchen Verfahrens notwendige Schlüsselverwaltung ist vergleichsweise aufwendig. Zudem liegen die zu schützenden biometrischen Daten zumindest in der Prüfeinrichtung im Klartext vor, so daß Angriffe hier grundsätzlich denkbar sind.

Aus der DE 199 22 946 A1 ist der Vorschlag bekannt, Authentikationsdaten, die auf eine Hardwareeinheit - insbesondere eine Chipkarte - gebracht werden sollen, mit dem öffentlichen Schlüssel eines asymmetrischen Schlüsselpaares zu verschlüsseln und in so verschlüsselter Form auf die Hardwareeinheit zu bringen. Mittels des korrespondierenden geheimen Schlüssels werden die Daten auf der Hardwareeinheit wieder entschlüsselt und gespeichert. Das Verfahren eignet sich beispielsweise um PIN-Nummern auf Chipkarten zu übertragen.

Aufbau, Herstellung und Handhabung tragbarer Datenträger sowie der zugehörigen Systeme sind z.B. in dem "Handbuch der Chipkarte", Rankl, Effing, 3. Auflage, 1999, Hanser-Verlag, beschrieben. Eine Übersicht über die eingesetzten kryptographischen Techniken und ihre Grundlagen findet sich unter anderem in "Angewandte Kryptographie",B. Schneider, 1996, Addison-Wesley-Verlag.

Der Erfindung liegt nun die Aufgabe zugrunde, für ein auf einem tragbaren Datenträger basierendes Transaktionssystem ein einfach realisierbares Authentisierungsverfahren anzugeben, das es erlaubt, die Nutzung eines tragbaren Datenträgers nur durch eine dazu berechtigte Person sicherzustellen.

Diese Aufgabe wird gelöst durch ein Verfahren mit den Merkmalen des Hauptanspruchs.

Erfindungsgemäß werden die Datenträger mit einer Datenträgerkennung versehen, die durch Verfremdung eines aus einem biometrischen Merkmal einer berechtigten Person abgeleiteten Referenzdatensatzes gebildet wird. Mittels einer solchermaßen gebildeten Datenträgerkennung wird ein Datenträger eindeutig einer bestimmten Person zugeordnet. Da das biometrische Merkmal nur in veränderter Form genutzt wird, ist es selbst bei Kenntnis des biometrischen Merkmales nicht möglich, einen Datenträger zu simulieren. Das erfindungsgemäße Verfahren hat weiter den Vorteil, daß keine Übertragung eines biometrischen Merkmales oder daraus abgeleiteter Daten zu dem tragbaren Datenträger hin notwendig ist. Die Authentisierung eines tragbaren Datenträgers erfolgt vollständig in der beteiligten Prüfeinrichtung. Der tragbare Datenträger muß nicht dazu ausgebildet sein, auf dem Datenträger eine Berechtigungsprüfung vorzunehmen. Als tragbare Datenträger können deshalb, ohne daß Änderungen an der technischen Realisierung vorzunehmen wären, gängige Bauformen, wie insbesondere gängige Chipkarten eingesetzt werden. Das erfindungsgemäße Verfahren ist entsprechend einfach einrichtbar und läßt sich insbesondere in der Regel als Softwarelösung auf vorhandenen Geräten einrichten.

Erfindungsgemäß erfolgt die Verfremdung des zu einem biometrischen Merkmal gebildeten digitalen Datensatzes nach einem symmetrischen Verschlüsselungsverfahren unter Verwendung eines Hauptschlüssels. Dieser Hauptschlüssel wird auch einer Prüfeinrichtung mitgeteilt und ermöglicht dieser die Durchführung einer Berechtigungsprüfung. In einer bevorzugten Ausführung wird ein symmetrisches Verschlüsselungsverfahren, etwa eine DES3-Verschlüsselung eingesetzt.

In einer zweckmäßigen Weiterbildung des erfindungsgemäßen Verfahrens wird die zu prüfende Datenträgerkennung des Vergleichsdatensatzes nicht aus einem hierzu aufgenommenen biometrischen Merkmal der nutzenden Person abgeleitet, sondern durch die Prüfeinrichtung von dem Datenträger angefordert. Der angeforderte digitale Datensatz wird dann in der Prüfeinrichtung nach dem gleichen kryptographischen Verfahren verschlüsselt wie es zur Bildung der Datenträgerkennung für den tragbaren Datenträger eingesetzt wurde. Das von der Prüfeinrichtung erzielte Ergebnis wird mit der von dem tragbaren Datenträger erhaltenen Datenträgerkennung verglichen.

In einer Variante dieser Ausführungsform kann vorgesehen sein, daß an der Prüfeinrichtung ein biometrisches Merkmal der nutzenden Person aufgenommen, daraus ein digitaler Vergleichsdatensatz abgeleitet und dieser mit dem von dem tragbaren Datenträger angeforderten digitalen Datensatz verglichen wird, bevor mit dem angeforderten digitalen Datensatz die Datenträgerkennung in der Prüfeinrichtung nachgebildet wird. Die Verwendung dieser Variante bietet sich z.B. an, wenn die Aufnahme des biometrischen Merkmales an der Prüfeinrichtung und seine nachfolgende Digitalisierung zu einem digitalen Vergleichsdatensatz führt, der verfahrensbedingt stark von dem auf dem tragbaren Datenträger gespeicherten digitalen Datensatz abweichen kann, so daß eine Verwendung eines solchen Vergleichsdatensatzes zur Nachbildung einer Datenträgerkennung zu unbrauchbaren Ergebnissen führen würde.

Unter Bezugnahme auf die Zeichnung werden nachfolgend Ausführungsbeispiele der Erfindung näher erläutert.

Es zeigen:
- Fig.1: die Struktur eines Transaktionssystems, in dem eine berechtigte Person bei Präsentation eines tragbaren Datenträgers Transaktionen ausführen kann,
- Fig. 2: die Struktur einer Anordnung zur Personalisierung eines tragbaren Datenträgers,
- Fig. 3: die Durchführung einer Berechtigungsprüfung basierend auf der Verwendung einer symmetrischen Verschlüsselungstechnik.

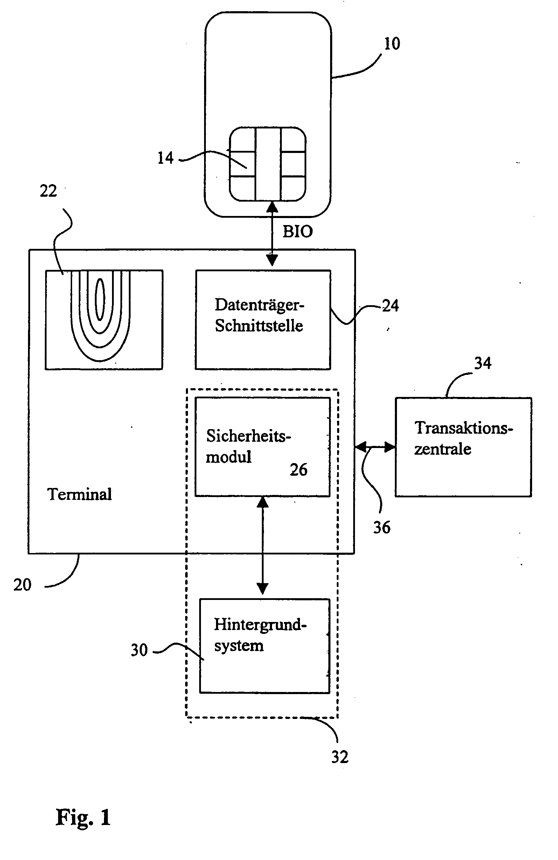

Fig.1 zeigt die Struktur eines Transaktionssystems, in dem zur Nutzung berechtigte Personen Transaktionen ausführen oder Dienste in Anspruch können. Das System wird gebildet von einem tragbaren Datenträger 10, einem Terminal 20, einem Hintergrundsystem 30 sowie einer Transaktionszentrale 34. Die Transaktionen bzw. Dienste selbst sowie die Prüfung der Berechtigung einer Person zur Nutzung bzw. Inanspruchnahme basieren wesentlich aus Softwarelösungen.

Der tragbare Datenträger 10 dient zum Nachweis der Berechtigung einer Person zur Nutzung des Transaktionssystems. Er ist hierzu mit einem integrierten Schaltkreis 12 ausgestattet, in dem auf eine berechtigte Person bezogene Daten abgelegt sind. Dem integrierten Schaltkreis 12 ist eine Schnittstelstelle 14 zugeordnet, über welche die personenbezogenen Daten auslesbar sind. In zweckmäßiger Ausgestaltung besitzt der tragbare Datenträger 10 die Form einer Chipkarte im ISO/IEC-Norm-Format. Die Schnittstelle 14 besitzt dann bei kontaktbehafteter Ausführung wie in Fig.1 angedeutet, die Gestalt eines Kontaktfeldes oder, alternativ, bei nichtkontaktierender Ausführung die Gestalt einer Spule. Neben Chipkartenform kann der tragbare Datenträger 10 beliebige andere geeignete Bauformen aufweisen, etwa die einer Armbanduhr oder eines Handys. Der integrierte Schaltkreis 12 ist ferner dazu eingerichtet, über die Schnittstelle 14 eingehende Informationen einer kryptographischen Bearbeitung zu unterziehen. Die genaue Realisierung der eingesetzten kryptographischen Technik ist dabei nicht Gegenstand dieser Erfindung. Hinsichtlich der Ausführung wird vielmehr auf die einschlägige Literatur verwiesen, etwa auf das eingangs zitierte Buch von B. Schneider.

Wesentliche Elemente des Terminals 20 sind ein Sensor 22 zur Erfassung eines biometrischen Merkmales einer Nutzung beabsichtigenden Person,eine zu der Schnittstelle 14 des tragbaren Datenträgers 10 korrespondierende Datenträgerschnittstelle 24 zum Zugriff auf die im integrierten Schaltkreis 12 des tragbaren Datenträgers 10 abgelegten personenbezogenen Daten sowie ein mit dem Sensor 22 und der Datenträgerschnittstelle 24 verbundenes Sicherheitsmodul 26, welches die Prüfung der Berechtigung einer Person zur Ausführung einer Transaktion vornimmt.

Der Sensor 22 nimmt ein von einer Person bereitgestelltes biometrisches Merkmal auf und bildet daraus einen -auch als *Template* bezeichneten - biometrischen Datensatz BIO, der ein in dem biometrischen Merkmal enthaltenes Muster wiedergibt. Bei dem Sensor 22 kann es sich, wie in Fig. 1 angedeutet, um einen Fingerabdrucksensor handeln. In anderer Ausführung kann der Sensor 22 eine Iris-Scanner-Einrichtung, eine Stimmerkennungs-Einrichtung, ein Temperaturfühler oder eine andere Anordnung zur Erfassung eines biometrischen Merkmales sein. Der Sensor 22 kann auch aus einer Kombination von Einrichtungen zur Erfassung verschiedener biometrischer Merkmale bestehen, etwa aus der Kombination eines Fingerabdrucksensors und einer Iris-Erkennung. Der Sensor 22 verfügt desweiteren über Datenverarbeitungsmittel, um ein aufgenommenes biometrisches Merkmal in einen Datensatz umzusetzen.

Die Datenträgerschnittstelle 24 hat bei Ausführung des tragbaren Datenträgers als kontaktbehaftete Norm-Chipkarte die Gestalt einer üblichen Lese-/Schreibeinheit. Bei kontaktlos kommunizierenden tragbaren Datenträgern 10 hat sie typischerweise die Form einer Sende-/Empfangsantenne.

Das Sicherheitsmodul 26 ist mit den Mitteln einer üblichen Datenverarbeitungsanordnung realisiert und basiert auf den Komponenten eines üblichen Computers. Es ist als eigenständige Einheit innerhalb des Terminals 20 oder als Teil einer zentralen Prozessoreinheit des Terminals 20 realisiert.

Das Terminal 20 kann z.B. ein Bankautomat, ein Fahrkartenautomat oder ein Warenautomat sein und entsprechend z.B. zur Durchführung von Banktransaktionen, zur Ausgabe von Fahrkarten oder zur Ausgabe von Waren dienen.

Mit dem Terminal 20 über ein Datennetz 36 verbunden ist eine Transaktionszentrale 34. Sie führt nach erfolgreichem Nachweis der Berechtigung einer Person die von der Person gewünschte Transaktion ganz oder in Teilen aus bzw. stellt den gewünschten Dienst zur Verfügung. Ist das Terminal 20 etwa ein Bankautomat und die von der Nutzung beabsichtigenden Person gewünschte Transaktion eine Geldbewegung zwischen zwei Konten, führt die Transaktionszentrale 34 z.B. die entsprechenden Last- bzw. Gutschriften aus. Die Transaktionszentrale 34 ist optional. Ist eine Transaktion vollständig an einem Terminal 20 ausführbar, entfällt sie.

Das Hintergrundsystem 30 ist mit dem Sicherheitsmodul 26 verbunden. Es besitzt die typischen Elemente eines Computers und ist z.B. in einem Rechenzentrum oder innerhalb einer Transaktionszentrale 34 realisiert. Bei ausreichender Leistungsfähigkeit des Sicherheitsmodules 26 kann das Hintergrundsystem 30 auch entfallen. Das Hintergrundsystem 30 führt solche Teile der von dem Sicherheitsmodul 26 ausgeführten Berechtigungsprüfungen aus, deren Ausführung in dem Sicherheitsmodul 26 nicht möglich oder nicht zweckmäßig ist. Beispielsweise verwaltet das Hintergrundsystem 30 die im Zuge einer Berechtigungsprüfung benötigten Schlüssel und stellt sie dem Sicherheitsmodul 26 zur Verfügung. Zweckmäßig sind in dem Hintergrundsystem 30 vor allem solche Teile einer Berechtigungsprüfung realisiert, die von einer Mehrzahl von Terminals 20 in Anspruch genommen werden. Das Hintergrundsystem 30 kann entsprechend mit einer Mehrzahl von Terminals 20 verbunden sein. Im Hinblick auf die hier beschriebene Erfindung bildet das Hintergrundsystem 30 eine funktionale Einheit mit dem Sicherheitsmodul 26. Sicherheitsmodul 26 und Hintergrundsystem 30 werden deshalb nachfolgend zusammengefaßt als Prüfeinrichtung 32 bezeichnet. Die Prüfeinrichtung 32 ist gleichfalls dazu eingerichtet, eingehende Informationen einer kryptographischen Bearbeitung zu unterziehen. Die genaue Realisierung der eingesetzten kryptographischen Techniken ist dabei wiederum nicht Gegenstand dieser Erfindung. Hinsichtlich der Ausführung wird vielmehr ebenfalls auf die einschlägige Literatur verwiesen, etwa auf das zitierte Buch von B. Schneider.

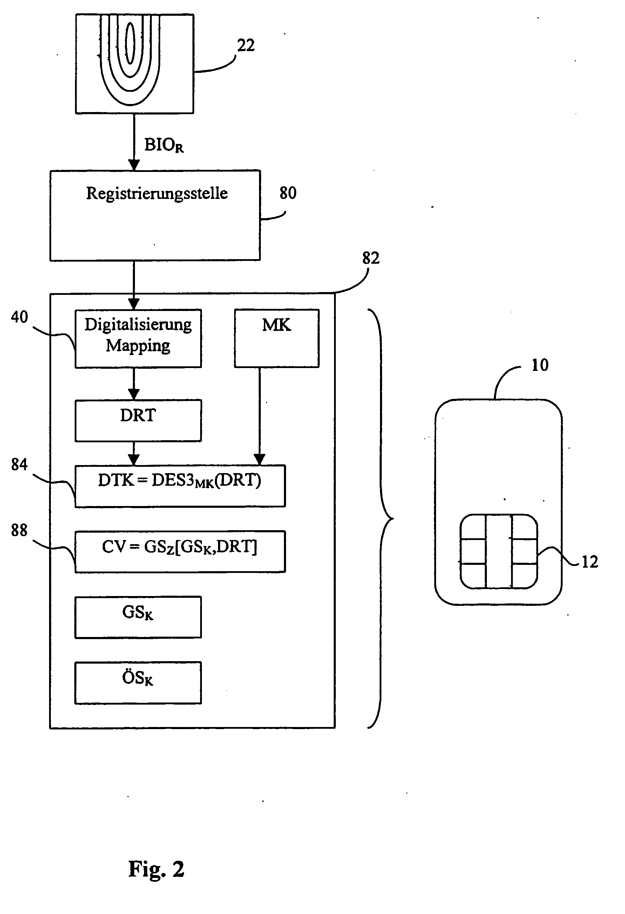

Fig. 2 zeigt eine Anordnung zur Personalisierung eines tragbaren Datenträgers 10 durch Einbringen von personenbezogenen Daten in den integrierten Schaltkreis 12. Sie umfaßt einen Sensor 22 zur Aufnahme eines biometrischen Merkmales einer Person, eine Registrierungsstelle 80 sowie eine Personaliserungsstelle 82.

Der Sensor 22 ist vom gleichen Typ wie der in Fig. 1 als Teil des Transaktionssystems wiedergegebene Sensor 22 und ermöglicht die Erfassung desselben biometrischen Merkmals. Zu einem erfaßten biometrischen Merkmal liefert er einen biometrischen Referenzdatensatz BIO_{R} *(template),* welcher ein in dem aufgenommenen biometrischen Merkmal enthaltenes Referenzmuster beschreibt. Die Erzeugung des Referenzdatensatzes BIO_{R} erfolgt im wesentlichen durch Ausführung eines Softwareprogrammes. Der Sensor 22 verfügt über entsprechende Datenverarbeitungsmittel.

Der Sensor 22 ist direkt mit der Registrierungsstelle 80 verbunden und zweckmäßig unmittelbar bei dieser aufgestellt. Die Registrierungsstelle 80 wiederum befindet sich vorzugsweise beim Herausgeber der tragbaren Datenträger 10, bei einem Betreiber eines Terminals 20 oder bei einem Anbieter eines Dienstes.

Die Personalisierungsstelle 82 befindet sich in der Regel vorzugsweise bei einem Hersteller oder einem Herausgeber von tragbaren Datenträgern 10. Sie beinhaltet alle üblichen Elemente eines Computers und ist insbesondere dazu eingerichtet, auf zugeführte Informationen kryptographische Techniken anzuwenden. Die verschiedenen möglichen Bearbeitungen sind in der Regel in Form von Softwareprogrammen angelegt.

Die Personalisierung eines tragbaren Datenträgers 10 erfolgt in der Regel im Rahmen einer einmalig durchgeführten Vorbereitungsphase und geschieht beispielsweise wie folgt. Mittels des Sensors 22 wird an einer Registrierungsstelle 80 ein biometrischer Referenzdatensatz BIO_{R} einer Person, die zur Nutzung eines tragbaren Datenträgers 10 berechtigt sein soll, aufgenommen. Der aufgenommene biometrische Referenzdatensatz BIO_{R} wird authentisch an die Personalisierungsstelle 82 weitergeleitet.

In der Personalisierungsstelle 82 wird der biometrische Referenzdatensatz BIO_{R} verfremdet. Hierzu wird er einer Digitalisierungsstufe 40 zugeführt und einer Digitalisierung unterworfen. Dabei wird der biometrische Referenzdätensatz BIO_{R} durch Anwendung geeigneter mathematischer Methoden in einen digitalen Referenzdatensatz DRT überführt. Vorzugsweise hat der digitale Referenzdatensatz DRT die Gestalt eines Digitalwertes mit einer vorbestimmten Anzahl von Stellen. Geeignete mathematische Methoden zur Durchführung der Digitalisierung finden sich in der einschlägigen Literatur, etwa in der eingangs referierten WO 01/15378.

Weiterhin wird in der Personalisierungsstelle 82 ein Hauptschlüssel *(master* key) MK bereitgestellt. Unter Verwendung dieses Hauptschlüssel MK wird der digitale Referenzdatensatz DRT in einer Verschlüsselungsstufe 82 einer Verschlüsselung mittels eines symmetrischen Verschlüsselungsverfahrens unterworfen. Vorzugsweise wird er, wie in Fig. 2 angedeutet, durch Ausführung eines DES3-(*Triple*-*DES*)-Verfahrens verschlüsselt. Das DES3-Verfahren ist u.a. in dem eingangs zitierten Buch von B. Schneider beschrieben. Aus der Verschlüsselung resultiert eine Datenträgerkennung DTK. Der digitale Referenzdatensatz DRT und die Datenträgerkennung DTK werden sodann als Personalisierungsdaten auf den tragbaren Datenträger 10 gebracht und in dessen integrierten Schaltkreis 12 gespeichert.

Alternativ oder zusätzlich ist die Personalisierungsstelle 82 dazu eingerichtet, unter Verwendung eines geheimen Schlüssels GSz *(secret key*) einer - nicht gezeigten - Zertifizierungsstelle in einer Zertifizierungsstufe 88 ein Zertifikat CV über einen öffentlichen Schlüssel ÖS_{K} *(public key*) des tragbaren Datenträgers 10 sowie über den digitalen Referenzdatensatz DRT zu bilden. Weiterhin ist die Personalisierungsstelle 82 dazu eingerichtet, ein aus einem öffentlichen Schlüssel ÖS_{K} und einem geheimen Schlüssel GS_{K} bestehendes Schlüsselpaar zur Verwendung in einem asymmetrischen Verschlüsselungsverfahren *(public key Kryptographie)* bereitzustellen. In dieser auf Verwendung eines asymmetrischen Verschlüsselungsverfahrens beruhenden Variante werden als Personalisierungsdaten der digitale Referenzdatensatz DRT, das Zertifikat CV, der öffentliche Schlüssel ÖS_{K} sowie der korrespondierende geheime Schlüssel GS_{K} auf den tragbaren Datenträger 10 gebracht.

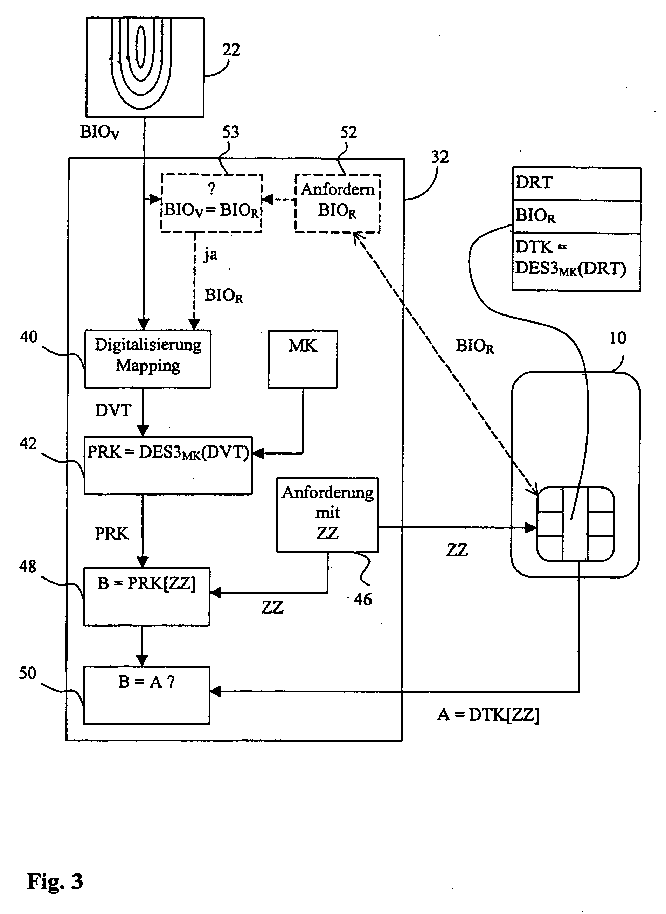

Anhand der Fig. 3 wird nachfolgend die Durchführung einer Berechtigungsprüfung basierend auf der Verwendung einer symmetrischen Verschlüsselungstechnik beschrieben. Die einzelnen Verfahrensschritte sind dabei in der Regel durch Ausführung entsprechender Softwareprogramme realisiert. Dies gilt insbesondere für die Prüfeinrichtung 32.

Bei der in Fig. 3 dargestellten Variante sind im integrierten Schaltkreis 12 des tragbaren Datenträgers 10 ein biometrischer Referenzdatensatz BIO_{R}, ein digitaler Referenzdatensatz DRT sowie eine Datenträgerkennung DTK angelegt. Die Datenträgerkennung DTK ist dabei durch Verschlüsselung des biometrischen Referenzdatensatzes DRT gemäß einem symmetrischen Verschlüsselungsverfahren unter Verwendung eines Hauptschlüssels MK gebildet. Der integrierte Schaltkreis 12 ist ferner dazu eingerichtet, eine zugeführte Dateninformation gemäß einem definierten Verschlüsselungsverfahren mittels der Datenträgerkennung DTK als Schlüssel zu verschlüsseln.

Die Prüfeinrichtung 32 ist zur Durchführung derselben definierten Verschlüsselung eingerichtet wie der tragbare Datenträger 10. Desweiteren steht der Prüfeinrichtung 32 derselbe Hauptschlüssel MK zu Verfügung, mit dem die Datenträgerkennung DTK gebildet wurde.

Um ihre Berechtigung zur Durchführung einer Transaktion oder Nutzung eines Dienstes nachzuweisen, präsentiert die Nutzung beabsichtigende Person den tragbaren Datenträger der Prüfeinrichtung 32, welche darauf über die Schnittstellen 24,14 in einen Datenaustausch mit dem tragbaren Datenträger 10 tritt.

Dabei übermittelt eine in der Prüfeinrichtung 32 eingerichtete Anforderungsstufe 46 dem integrierten Schaltkreis 12 des tragbaren Datenträgers 10 eine Zufallszahl ZZ.

Der integrierte Schaltkreis 12 überführt die erhaltene Zufallszahl ZZ durch Verschlüsselung gemäß dem definierten Verschlüsselungsverfahren in eine Authentifizierungsbotschaft A. Dabei dient die in dem Datenträger 10 vorhandene Datenträgerkennung DTK als Schlüssel. Die Authentifizierungsbotschaft A übermittelt der integrierte Schaltkreis 12 sodann der Prüfeinrichtung 32, welche sie an eine Vergleichsstufe 50 weiterleitet.

Unabhängig von der Präsentation des tragbaren Datenträgers 10 stellt die Nutzung beabsichtigende Person an dem Sensor 22 erneut das biometrische Merkmal bereit, von dem ausgehend auch die Datenträgerkennung DTK gebildet wurde. Der von dem Sensor 22 daraufhin aus dem erfaßten biometrischen Merkmal erzeugte biometrische Datensatz BIO_{V}, etwa ein Fingerabdruck, wird einer Digitalisierungsstufe 40 zugeführt und einer Digitalisierung unterworfen. Dabei wird es in einen digitalen Vergleichsdatensatz DVT umgesetzt, der vorzugsweise eine vorbestimmte Länge aufweist. Die Umsetzung erfolgt grundsätzlich auf dieselbe Weise wie die Ableitung des im tragbaren Datenträger 10 abgelegten digitalen Referenzdatensatzes DRT aus dem biometrischen Referenzdatensatz BIO_{R}. Zur Vereinfachung und Beschleunigung der Auswertung kann jedoch vorgesehen sein, daß der Vergleichsdatensatz DVT weniger umfangreich ist als der Referenzdatensatz DRT und beispielsweise weniger Stellen aufweist als jener.

Der digitale Vergleichsdatensatz DVT wird einer Verschlüsselungsstufe 42 zugeführt. Dieser steht auch der Hauptschlüssel MK zur Verfügung, mittels dessen die Bildung der Datenträgerkennung DTK erfolgte. Mit dem Hauptschlüssel MK verschlüsselt die Verschlüsselungsstufe 42 den digitalen Vergleichsdatensatz DVT gemäß demselben symmetrischen Verschlüsselungsverfahren, das auch im tragbaren Datenträger 10 zur Bildung der Datenträgerkennung DTK eingesetzt wurde und erzeugt so Probekennungsdaten PRK. Die Probekennungsdaten PRK werden sodann an eine weitere Verschlüsselungsstufe 48 weitergeleitet.

Dort bilden sie einen Schlüssel, mit dem die an den tragbaren Datenträger 10 ausgesandte Zufallszahl ZZ nach demselben definierten Verschlüsselungsverfahren verschlüsselt werden, wie es von dem Datenträger 10 eingesetzt wird. Es resultiert eine Prüfbotschaft B, welche an die Vergleichseinrichtung 50 übermittelt wird, wo sie mit der Authentifizierungsbotschaft A verglichen wird. Stellt die Vergleichseinrichtung 50 Übereinstimmung zwischen der Prüfbotschaft B und der Authentifizierungsbotschaft A fest, erkennt sie die Nutzung beabsichtigende Person als berechtigt an und gibt die Transaktion frei bzw. eröffnet den Zugang zu dem gewünschten Dienst.

In einer Variante des in Fig. 3 dargestellten Verfahrens wird als Grundlage für die Durchführung der Digitalisierung in der Digitalisierungsstufe 40 nicht ein mittels des Sensors 22 erzeugter biometrischer Datensatz BIO_{V} verwendet. Stattdessen fordert die Prüfeinrichtung 32 mittels einer Anforderungsstufe 52 von dem tragbaren Datenträger 10 die Übermittlung des in dem integrierten Schaltkreis 12 gespeicherten biometrischen Referenzdatensatzes BIO_{R} an. Der integrierte Schaltkreis 12 übermittelt darauf den angeforderten biometrischen Datensatz BIO_{R} an die Prüfeinrichtung 32. Diese vergleicht nun in einer Vergleichsstufe 53 den von dem tragbaren Datenträger 10 erhaltenen biometrischen Referenzdatensatz BIO_{R} mit dem von dem Sensor 22 übermittelten biometrischen Datensatz BIO_{V}. Stimmen beide überein, stammen mithin beide von derselben Person, führt die Prüfeinrichtung 32 anschließend die von dem tragbaren Datenträger 10 übermittelten biometrischen Referenzdatensatz BIO_{R} der Verschlüsselungsstufe 42 zu, wo er durch Anwendung eines symmetrischen Verschlüsselungsverfahrens unter Verwendung des Hauptschlüssels MK in Probekennungsdaten PRK überführt wird.

Aus den Probekennungsdaten PRK wird nachfolgend in der Verschlüsselungsstufe 48 wiederum eine Prüfbotschaft B gebildet, indem die zur Anforderung der Authentifizierungsbotschaft A vom tragbaren Datenträger 10 ausgesandte Zufallszahl ZZ mit den Probekennungsdaten PRK verschlüsselt wird. Die Prüfbotschaft B wird schließlich in der Vergleichsstufe 50 mit der von dem tragbaren Datenträger 10 übermittelten Authentifizierungsbotschaft A verglichen.

Unter Beibehaltung des grundlegenden Gedankens, einen tragbaren Datenträger mit einer Datenträgerkennung zu versehen, die durch Verfremdung mittels mathematischer Methoden aus einem der berechtigten Person zugeordneten biometrischen Datensatz abgeleitet wird, gestattet das beschriebene Verfahren eine Vielzahl zweckmäßiger Ausgestaltungen. So kann vorgesehen sein, daß der tragbare Datenträger 10 und die Prüfeinrichtung 32 vor der Übersendung der Authentifizierungsbotschaft A, C Sitzungsschlüssel aushandeln und diese zur weiteren Sicherung der zwischen tragbarem Datenträger 10 und Prüfeinrichtung 32 ausgetauschten Daten einsetzen. Die Datenträgerkennung DTK kann außer dem verfremdeten biometrischen Merkmal weitere Informationen enthalten, etwa eine Seriennummer. Weiter kann die softwaremäßige und technische Realisierung der einzelnen Bearbeitungsstufen auf vielfältige Weise erfolgen. Beispielsweise kann die Prüfeinrichtung physisch verteilt auf mehrere Einheiten ausgebildet sein und die Durchführung einzelner Stufen in verschiedenen physischen Einheiten erfolgen. Das sinngemäß gleiche gilt für die Personalisierungsstelle.

## Patentansprüche

1. Verfahren zum Nachweis der Berechtigung einer Person zur Nutzung eines tragbaren Datenträgers gegenüber einer Prüfungseinrichtung, wobei in einer Vorbereitungsphase eine Kennung auf den Datenträger gebracht wird und wobei für eine Nutzung die Kennung zumindest teilweise erneut bereitgestellt werden muß, wobei weiter in der Vorbereitungsphase die Kennung (DTK) aus einem der Person zugeordneten biometrischen Datensatz (BIO_{R}) abgeleitet wird, indem der biometrische Datensatz (BIO_{R}) mittels eines Digitalisierungsverfahrens in einen digitalen Datensatz (DRT) überführt und auf diesen ein kryptographisches Verfahren angewendet wird, und bei einer Nutzung der biometrische Datensatz (BIO_{V}) der Prüfeinrichtung (32) erneut bereitgestellt und die Kennung (DTK) von dem Datenträger (10) an die Prüfeinrichtung übermittelt (32) wird, **dadurch gekennzeichnet, daß**
- in der Prüfeinrichtung (32) aus dem erneut bereitgestellten biometrischen Datensatz (BIO_{V}) Probekennungsdaten (PRK) abgeleitet werden, indem aus dem erneut bereitgestellten biometrischen Datensatz (BIO_{V}) mittels des genannten Digitalisierungsverfahrens ein digitaler Vergleichsdatensatz (DVT) erzeugt und auf diesen das genannte kryptographische Verfahren angewendet wird,
- in der Prüfeinrichtung (32) mittels der Probekennungsdaten (PRK) eine Anforderungsbotschaft (ZZ) verschlüsselt wird,
- durch den tragbaren Datenträger (10) mittels der Kennung (DTK) dieselbe Anforderungsbotschaft (ZZ) verschlüsselt wird, und
- die Ergebnisse beider Verschlüsselungen in der Prüfeinrichtung (32) verglichen werden.

2. Verfahren nach Anspruch 1, **dadurch gekennzeichnet, daß** der erneut bereitgestellte biometrische Datensatz (BIO_{V}) aus Informationen gewonnen wird, die von einem der Prüfeinrichtung (32) zugeordneten Sensor (22) geliefert werden.

3. Verfahren nach Anspruch 1, **dadurch gekennzeichnet, daß** die erneute Bereitstellung des biometrischen Datensatzes erfolgt, indem der biometrische Referenzdatensatz (BIO_{R}) von dem Datenträger (10) an die Prüfeinrichtung (32) übermittelt wird.

4. Verfahren nach Anspruch 3, **dadurch gekennzeichnet, daß** die Übermittlung des biometrischen Referenzdatensatzes (BIO_{R}) von dem Datenträger (10) nur ausgeführt wird, wenn die Anwendung des Digitalisierungsverfahrens auf einen aus Informationen des Sensors (22) gebildeten biometrischen Datensatz (BIO_{V}) nicht möglich ist.

5. Verfahren nach Anspruch 3, **dadurch gekennzeichnet, daß** der aus Informationen des Sensors (22) gebildete biometrische Datensatz (BIO_{V}) mit dem von dem Datenträger (10) übermittelten biometrischen Referenzdatensatz (BIO_{R}) verglichen wird.

6. Verfahren nach Anspruch 1, **dadurch gekennzeichnet, daß** das in der Vorbereitungsphase eingesetzte kryptographische Verfahren eine symmetrische Verschlüsselung unter Verwendung eines Masterkeys (MK) beinhaltet.

7. Verfahren nach Anspruch 6, **dadurch gekennzeichnet, daß** der Masterkey (MK) von einer Zertifizierungsstelle bereitgestellt wird.

8. Verfahren nach Anspruch 1, **dadurch gekennzeichnet, daß** das in der Vorbereitungsphase eingesetzte kryptographische Verfahren eine DES3-Verschlüsselung beinhaltet.

9. Verfahren nach Anspruch 1, **dadurch gekennzeichnet, daß** der digitale Datensatz (DRT) eine alphanumerische Zeichenfolge bildet, welcher einer zur Benutzung des tragbaren Datenträgers (10) berechtigten Person bekannt gemacht wird.

10. Verfahren nach Anspruch 1, **dadurch gekennzeichnet, daß** die Übermittlung der Kennung (DTK) an die Prüfeinrichtung (32) verschlüsselt erfolgt, wobei die Kennung (DTK) als Schlüssel dient, mit dem eine Anforderungsbotschaft (ZZ) verschlüsselt wird.

11. Tragbarer Datenträger zur Durchführung eines Verfahrens zum Nachweis der Berechtigung einer Person zu seiner Nutzung mit einer Schnittstelle zur Führung eines Datenaustausches mit einem integrierten Schaltkreis, einer Schnittstelle zum Austausch von Daten mit einer korrespondierenden Schnittstelle eines Terminals, sowie einer Speichereinrichtung, **dadurch gekennzeichnet, daß** in der Speichereinrichtung ein der berechtigten Person zugeordneter biometrischer Datensatz (DRT, BIO_{R}) sowie eine Kennung (DTK) abgelegt sind, welche durch Anwendung eines kryptographischen Verfahrens auf den biometrischen Datensatz (DRT, BIO_{R}) gebildet wurde, und der integrierte Schaltkreis (12) dazu eingerichtet ist, eine über die Schnittstelle (14) eingehende Information (ZZ) einer kryptographischen Bearbeitung unter Verwendung der Kennung (DTK) zu unterziehen.

12. Prüfeinrichtung zur Durchführung eines Verfahrens zum Nachweis der Berechtigung einer Person zur Nutzung eines tragbaren Datenträgers mit einem Sensor zur Aufnahme eines biometrischen Merkmales, einer Schnittstelle zur Führung eines Datenaustausches mit einem tragbaren Datenträger sowie Mitteln zur Prüfung einer von einem tragbaren Datenträger zugesandten Kennung, **dadurch gekennzeichnet, daß** sie Mittel (22, 42, 48) besitzt, um einen biometrischen Datensatz (BIO_{V}) durch Anwendung eines kryptographischen Verfahrens in Probekennungsdaten (PRK) zu überführen und mit diesen sodann eine Anforderungsbotschaft (ZZ) zu einer Prüfbotschaft (B) zu verschlüsseln, welche bei gegebener Berechtigung mit einer Authentifizierungsbotschaft (A) übereinstimmt, die durch Verschlüsselung derselben Anforderungsbotschaft (ZZ) mit der Kennung (DTK) des Datenträgers (10) entsteht.

13. System zum Nachweis der Berechtigung einer Person zur Nutzung eines tragbaren Datenträgers, **gekennzeichnet durch** einen tragbaren Datenträger nach Anspruch 11 sowie eine Prüfeinrichtung nach Anspruch 12.

## Claims

1. A method for determining the authorization of a person to use a portable data carrier vis-à-vis a checking device, wherein in a preparatory phase an identification key is brought onto the data carrier and wherein for a use the identification key has to be provided anew at least partially, wherein in the preparatory phase the identification key (DTK) is derived from a biometric data record (BIO_{R}) associated to the person by converting the biometric data record (BIO_{R}) into a digital data record (DRT) with the help of a digitalization method and applying a cryptographic method to this data record (DRT), and at the time of a use the biometric data record (BIO_{V}) is provided anew to the checking device (32) and the identification key (DTK) of the data carrier (10) is transmitted to the checking device (32),
**characterized in that**
- in the checking device (32) from the biometric data record (BIO_{V}) provided anew proof identification data (PRK) are derived by generating a digital reference data record (DVT) from the biometric data record (BIO_{V}) provided anew with the help of said digitalization method and applying said cryptographic method to this digital reference data record (DVT),
- in the checking device (32) a request message (ZZ) is encrypted with the help of the proof identification data (PRK),
- by the portable data carrier (10) the same request message (ZZ) is encrypted with the help of the identification key (DTK), and
- the results of the two encryptions are compared in the checking device (32).

2. The method according to claim 1, **characterized in that** the biometric data record (BIO_{V}) provided anew is obtained from information that is supplied by a sensor (22) associated to the checking device (32).

3. The method according to claim 1, **characterized in that** the anew provision of the biometric data record is effected by the biometric reference data record (BIO_{R}) being transmitted to the checking device (32) by the data carrier (10).

4. The method according to claim 3, **characterized in that** the transmission of the biometric reference data record (BIO_{R}) is carried out by the data carrier (10) only when the digitalization method cannot be applied to a biometric data record (BIO_{V}) formed of information of the sensor (22).

5. The method according to claim 3, **characterized in that** the biometric data record (BIO_{V}) formed of information of the sensor (22) is compared to the biometric reference data record (BIO_{R}) transmitted by the data carrier (10).

6. The method according to claim 1, **characterized in that** the cryptographic method employed in the preparatory phase includes a symmetric encryption using a master key (MK).

7. The method according to claim 6, **characterized in that** the master key (MK) is provided by a certifying authority.

8. The method according to claim 1, **characterized in that** the cryptographic method employed in the preparatory phase includes a DES3 encryption.

9. The method according to claim 1, **characterized in that** the digital data record (DRT) forms an alphanumeric character string, which is made known to a person authorized to use the portable data carrier (10).

10. The method according to claim 1, **characterized in that** the transmission of the identification key (DTK) to the checking device (32) is effected in encrypted form, the identification key (DTK) serving as a key with which a request message (ZZ) is encrypted.

11. A portable data carrier for carrying out a process for determining the authorization of a person to use it having an interface for carrying out a data exchange with an integrated circuit, an interface for exchanging data with a corresponding interface of a terminal, and a memory unit, **characterized in that** in the memory unit is stored a biometric data record (DRT, BIO_{R}) associated to the authorized person and an identification key (DTK) that has been formed by applying a cryptographic method to the biometric data record (DRT, BIO_{R}), and the integrated circuit (12) is adapted to have an information (ZZ), which comes in via the interface (14), cryptographically processed using the identification key (DTK).

12. A checking device for carrying out a process for determining the authorization of a person to use a portable data carrier having a sensor for receiving a biometric feature, an interface for carrying out a data exchange with a portable data carrier and devices for checking an identification key sent by a portable data carrier, **characterized in that** it has devices (22, 42, 48) to convert a biometric data record (BIO_{V}) into proof identification data (PRK) by applying a cryptographic method, and to subsequently encrypt with the help of said proof identification data (PRK) a request message (ZZ) to form a checking message (B), which in the case of a given authorization corresponds to an authentication message (A), which is the result from an encryption of the same request message (ZZ) with the identification key (DTK) of the data carrier (10).

13. A system for determining the authorization of a person to use a portable data carrier, **characterized by** a portable data carrier according to claim 11 and a checking device according to claim 12.

## Revendications

1. Procédé de justification, vis-à-vis d'un dispositif de contrôle, du droit d'une personne à utiliser un support de données portable, une identification étant inscrite, dans une phase préliminaire, sur un support de données et l'identification devant être régénérée au moins partiellement pour utilisation, et à un stade ultérieur de la phase préliminaire, l'identification (DTK) étant dérivée de l'enregistrement de données biométrique (BIO_{R}) attribuée à une personne, en transposant par un procédé de numérisation, cet enregistrement de données biométrique (BIO_{R}) en un enregistrement de données numérique (DRT) et en appliquant à ce dernier un procédé cryptographique, et en cas d'utilisation, l'enregistrement de données biométrique (BIO_{V}) étant régénéré pour le dispositif de contrôle (32) et l'identification (DTK) étant transférée du support de données (10) dans le dispositif de contrôle (32),
**caractérisé en ce que**:
- à partir de l'enregistrement de données biométrique (BIO_{V}) régénéré sont dérivées des données pour essai d'identification (PRK) dans le dispositif de contrôle (32), en créant à partir du nouvel enregistrement de données biométrique (BIO_{V}) régénéré, au moyen dudit procédé de numérisation, un enregistrement de données numérique comparatif (DVT) auquel est appliqué ledit procédé cryptographique,
- un message de requête (ZZ) est codé dans le dispositif de contrôle (32) à l'aide des données pour essai d'identification (PRK),
- ce même message de requête (ZZ) est codé via le support de données (10) portable au moyen de l'identification (DTK), et
- les résultats des deux codages sont comparés dans le dispositif de contrôle (32).

2. Procédé selon la revendication 1, **caractérisé en ce que** l'enregistrement de données biométrique (BIO_{V}) régénéré est acquis à partir d'informations délivrées par un capteur (22) asservi au dispositif de contrôle (32).

3. Procédé selon la revendication 1, **caractérisé en ce que** la régénération de l'enregistrement de données biométrique s'effectue en transférant l'enregistrement de données biométrique (BIO_{R}) du support de données (10) dans le dispositif de contrôle (32).

4. Procédé selon la revendication 3, **caractérisé en ce que** le transfert de l'enregistrement de données biométrique (BIO_{R}) de référence du support de données (10) n'est exécuté que si l'application du procédé de numérisation sur un enregistrement de données biométrique (BIO_{V}) généré à partir d'informations du capteur (22) est impossible.

5. Procédé selon la revendication 3, **caractérisé en ce que** l'enregistrement de données biométrique (BIO_{V}) généré à partir d'informations du capteur (22) est comparé à l'enregistrement de données biométrique (BIO_{R}) de référence transféré du support de données (10).

6. Procédé selon la revendication 1, **caractérisé en ce que** dans la phase préliminaire, le procédé cryptographique utilisé contient un codage symétrique en faisant appel à une clé maîtresse (MK).

7. Procédé selon la revendication 6, **caractérisé en ce que** la clé maîtresse (MK) est délivrée par un service de certification.

8. Procédé selon la revendication 1, **caractérisé en ce que** dans la phase préliminaire, le procédé cryptographique utilisé contient un codage DES3.

9. Procédé selon la revendication 1, **caractérisé en ce que** l'enregistrement de données numérique (DRT) forme une chaîne de caractères alphanumérique qui est donnée à une personne autorisée à utiliser le support de données (10).

10. Procédé selon la revendication 1, **caractérisé en ce que** le transfert de l'identification (DTK) au dispositif de contrôle (32) s'effectue sous forme codée, l'identification (DTK) servant de clé avec laquelle on code un message de requête (ZZ).

11. Support de données portable pour la réalisation d'un procédé destiné à la justification du droit d'une personne à l'utiliser, comportant une interface pour effectuer un échange de données avec un circuit intégré, une interface pour échanger des données avec une interface de terminal correspondante ainsi qu'un dispositif de sauvegarde, **caractérisé en ce que** sont enregistrés dans le dispositif de sauvegarde, un enregistrement de données biométrique affecté à la personne autorisée (DRT, BIO_{R}) ainsi qu'une identification (DTK) qui a été générée en appliquant un procédé cryptographique à l'enregistrement de données biométrique (DRT, BIO_{R}) et **en ce que** le circuit intégré (12) a été conçu pour soumettre l'information entrante (ZZ) via l'interface (14) à un traitement cryptographique en utilisant l'identification (DTK).

12. Dispositif de contrôle pour la réalisation d'un procédé destiné à la justification du droit d'une personne à utiliser un support de données portable, comportant un capteur pour la saisie d'une caractéristique biométrique, une interface pour l'exécution d'un échange de données avec un support de données portable ainsi que des moyens de contrôle d'une identification envoyée par un support de données portable, **caractérisé en ce qu'**il possède des moyens (22, 42, 48) pour transposer en appliquant un procédé cryptographique, un enregistrement de données biométrique (BIO_{V}) en données pour essai d'identification (PRK) et pour coder ensuite avec celles-ci un message de requête (ZZ) en message d'essai (B) qui en cas d'attribution du droit, correspond à un message d'authentification (A) généré par codage dudit message de requête (ZZ) avec l'identification (DTK) du support de données (10).

13. Système de justification du droit d'une personne à utiliser un support de données portable, **caractérisé en** un support de données portable selon la revendication 11 et en un dispositif de contrôle selon la revendication 12.
